# EUROPEAN PATENT SPECIFICATION

(11) **EP 1 679 243 B1**
(45) Date of publication and mention of the grant of the patent: **27.06.2007**
(21) Application number: 05026375.5
(22) Date of filing: 02.12.2005
(51) Int. Cl.: B60T 8/36, B62L 3/00, B62K 25/00, B62K 11/00

(54) **Motorcycle with ABS unit**
Motorrad mit ABS-Einheit
Moto avec unité ABS

(30) Priority: 11.01.2005 JP 2005004544
(43) Date of publication of application: 12.07.2006
(73) Proprietor: HONDA MOTOR CO., Ltd., Tokyo (JP)
(72) Inventor: Misaki, Kenichi, Wako-shi Saitama (JP); Nakano, Toshinori, Wako-shi Saitama (JP); Kofuji, Kenji, Wako-shi Saitama (JP)
(74) Representative: Rupp, Christian

(56) References cited:
- EP-A- 0 624 498
- EP-A- 1 531 104
- PATENT ABSTRACTS OF JAPAN vol. 1995, no. 02, 31 March 1995 (1995-03-31) -& JP 06 329006 A (SUZUKI MOTOR CORP), 29 November 1994 (1994-11-29)
- PATENT ABSTRACTS OF JAPAN vol. 013, no. 552 (M-903), 8 December 1989 (1989-12-08) -& JP 01 226485 A (YAMAHA MOTOR CO LTD), 11 September 1989 (1989-09-11)
- PATENT ABSTRACTS OF JAPAN vol. 017, no. 483 (M-1472), 2 September 1993 (1993-09-02) -& JP 05 116667 A (YAMAHA MOTOR CO LTD), 14 May 1993 (1993-05-14)

## Description

The present invention relates to an improvement of a motorcycle comprising an arrangement structure of an ABS unit.

As a conventional arrangement structure of an ABS unit for a motorcycle, one, in which a hydraulic unit as a body of an anti-lock braking system is disposed in the rear of the vehicle body, has been known (see Patent Document 1, for example).
[Patent Document 1] Japanese Patent Laid-Open Publication No. H05-116667

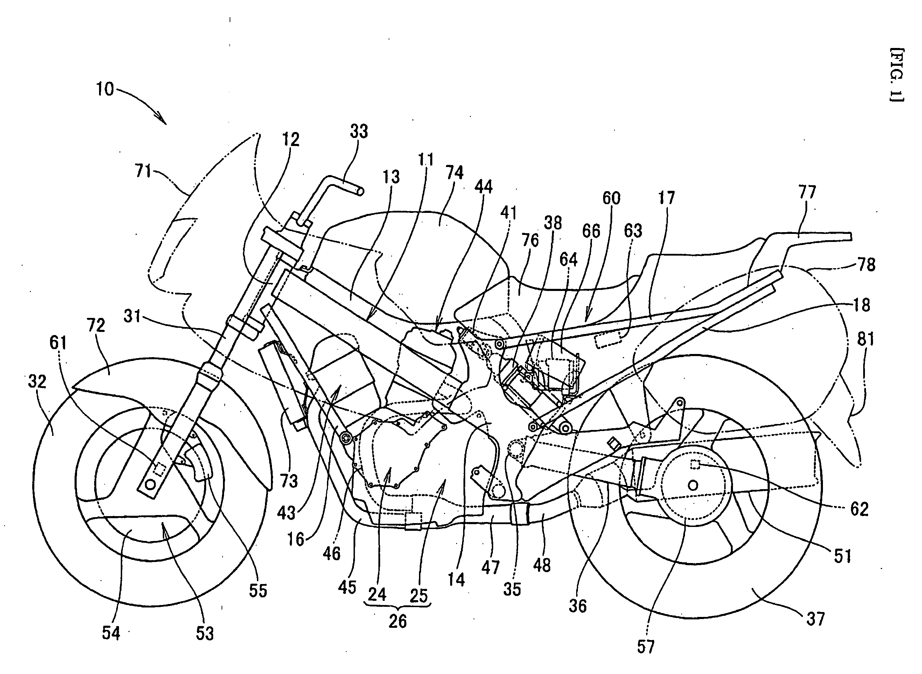

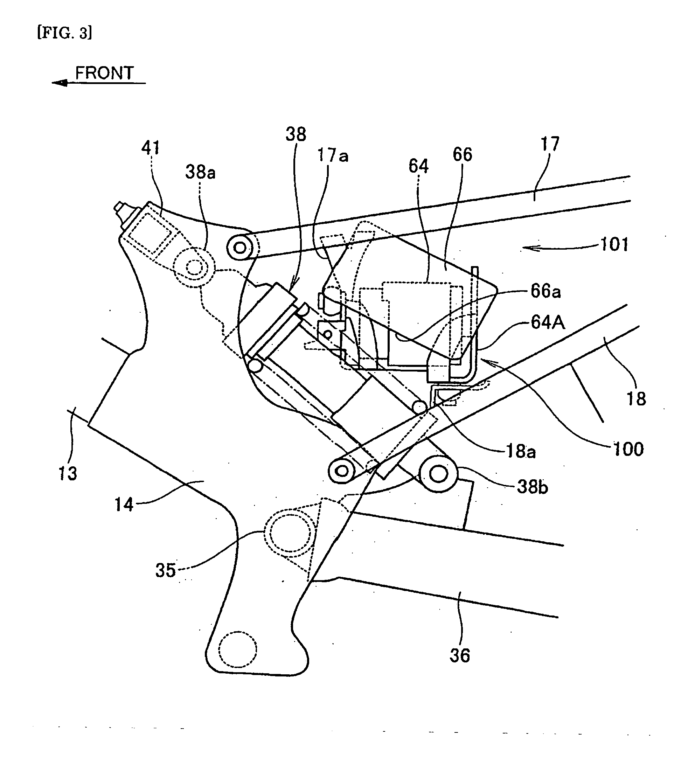

A description will be given below of Patent Document 1. Note that the reference numerals which are written in the publication are used.
As is shown in Figs. 1 and 3 of the publication, a hydraulic unit 31 is disposed in the right side of the body under a seat 7 to the rear of an engine 13.

The hydraulic unit 31 is relatively heavy because it is constituted of a motor, a pump, solenoid valves, hydraulic pipes and the like. If the unit is disposed in the right side of the body as described above, it is necessary to consider the arrangement of equipment of the body to maintain the right-and-left balance of weight of the vehicle.
Patent document EP 0 624 498 A2 relates to a mounting structure for an antiskid braking device for a motorcycle. A pump unit is arranged side-by-side with a battery along the body width of the motorcycle. The pump unit is placed on the opposite side (right side of the body) to a drive chain beyond the battery. A pump unit holder is fixed to the body frame and is provided with a pump unit holding section for holding the pump unit and further a battery holding section for holding the battery. A front fixing section which is to be bolted to a fixing bracket used for fastening the rear cushion unit, is provided on the front portion of the pump unit holder.
An object of the present invention is to improve the right-and-left balance of weight of a vehicle equipped with an ABS.

The invention according to claim 1 is characterized in that, in a motorcycle equipped with an ABS, the ABS unit including a motor, a pump, hydraulic pipes and solenoid valves for constituting the ABS is disposed laterally side by side with a battery under the seat.
Since the ABS unit is disposed laterally side by side with the battery under the seat, it is made possible to concentrate the ABS unit and the battery, which are weighty, at the center of the body, in other words, under the seat.

The invention according to claim 1 is further characterized in that the ABS unit and the battery are disposed laterally dispersedly with the rear cushion unit at least partly interposed therebetween. The right-and-left balance of weight of the vehicle is good by virtue of the ABS unit and the battery which are disposed laterally dispersedly.
In the invention according to claim 1, since the battery and the ABS unit are dispersed to the left and the right of the rear cushion unit, the right-and-left balance of weight of the motorcycle is good, and it is possible to improve the driving performance of the motorcycle.

Fig. 1 is a side view of a motorcycle comprising a non-claimed arrangement structure of an ABS unit (a first embodiment).
Fig. 2 is a plan view of the motorcycle (the first embodiment).
Fig. 3 is a main-part side view of the motorcycle (the first embodiment).
Fig. 4 is a main-part plan view of the motorcycle (the first embodiment).
Fig. 5 is an exploded perspective view showing a support structure of the modulator (the first embodiment).
Fig. 6 is a main-part side view of a motorcycle adopting an arrangement structure of an ABS unit (a second embodiment) according to the present invention.
Fig. 7 is a main-part plan view of the motorcycle (the second embodiment) according to the present invention.

A description will be given of best modes for carrying out the present invention with reference to the attached drawings. Incidentally, the drawings are such that objects are viewed from the direction related to the reference numerals.
Fig. 1 is a side view of a motorcycle adopting an arrangement structure of an ABS unit (a first embodiment).
The motorcycle 10 is a vehicle in which a body frame 11 is constituted of: a head pipe 12; a left-right pair of main frames 13, 13 (only the reference numeral 13 on the viewer's side is shown) extended rearward and obliquely downward from the head pipe 12; a left-right pair of pivot plates 14, 14 (only the reference numeral 14 on the viewer's side is shown) attached to the rear ends of these main frames 13, 13; a left-right pair of down frames 16, 16 (only the reference numeral 16 on the viewer's side is shown) extended rearward and obliquely downward from the head pipe 12, under the main frames 13, 13; a left-right pair of seat rails 17, 17 (only the reference numeral 17 on the viewer's side is shown) extended rearward from upper portions of the pivot plates 14, 14; and sub-frames 18, 18 (only the reference numeral 18 on the viewer's side is shown), attached to respective rear portions of the seat rails 17, 17 and to respective rear portions of the pivot plates 14, 14, extended therebetween. In addition, a power unit 26 constituted of an engine 24 and a transmission 25 is attached to the pivot plates 14, 14 and the down frames 16, 16.

With regard to the head pipe 12, a front fork 31 is freely steerably attached thereto. A front wheel 32 is installed at the lower end of the front fork 31, and a bar handle 33 is attached to the upper end of the front fork 31.

The pivot plate 14 is a member to which a swing arm 36 is attached via a swing shaft 35. The swing arm 36 is a member on which a rear wheel 37 is installed at the rear end thereof, and which houses a shaft for transmitting power from the transmission 25 to the rear wheel 37 in a hollow therein. In addition, reference numeral 38 indicates a rear cushion unit which is attached to the swing arm 36 and to a portion on the pivot plate 14 side (specifically, to a cross pipe 41 extended between the left-right pivot plates 14, 14), extended therebetween.

The engine 24 is V-type. Exhaust pipes 45 and 46 are individually extended downward from a front cylinder 43 and a rear cylinder 44. A muffler 51 is connected to these exhaust pipes 45 and 46 via a collecting pipe 47 and a rear exhaust pipe 48.

With regard to the front wheel 32, a front disk brake 53 is annexed thereto. The front disk brake 53 includes a brake disk 54 installed integrally to the front wheel 32, and a brake caliper 55 attached to the front fork 31 to brake by squeezing the brake disk 54.
With regard to the rear wheel 37, a rear drum brake 57 is annexed thereto.

The front disk brake 53 and the rear drum brake 57 described above are connected to an anti-lock braking system 60 (hereinafter, referred to merely as "ABS 60").

The ABS 60 includes: a front wheel speed sensor 61 detecting the wheel speed of the front wheel 32; a rear wheel speed sensor 62 detecting the wheel speed of the rear wheel 37; a control unit 63 determining the slipping state of the wheels at the time of braking on the basis of wheel speed signals from the front wheel speed sensor 61 and the rear wheel speed sensor 62 and sending a control signal to a modulator described later to maintain an appropriate slip ratio; and a modulator 64 increasing or decreasing oil pressure for braking in the front disk brake 53 and the rear drum brake 57 on the basis of the control signal from the control unit 63.

The modulator 64 includes an electric motor, a pump driven by the electric motor, a plurality of hydraulic pipes connected to the pump, and solenoid valves provided in the midstream of these hydraulic pipes, and is an assembly disposed between the seat rail 17 and the sub-frame 18 in a side view.
A battery 66 is disposed on the viewer's side of the modulator 64 in the side view.

Here, reference numeral 71 indicates a front cowl; 72, a front fender; 73, a radiator; 74, a fuel tank; 76, a seat mounted on the left-right seat rails 17, 17; 77, a grab rail; 78, 78 (only the reference numeral 78 on the viewer's side is shown), rear side luggage boxes; and 81, a rear fender.

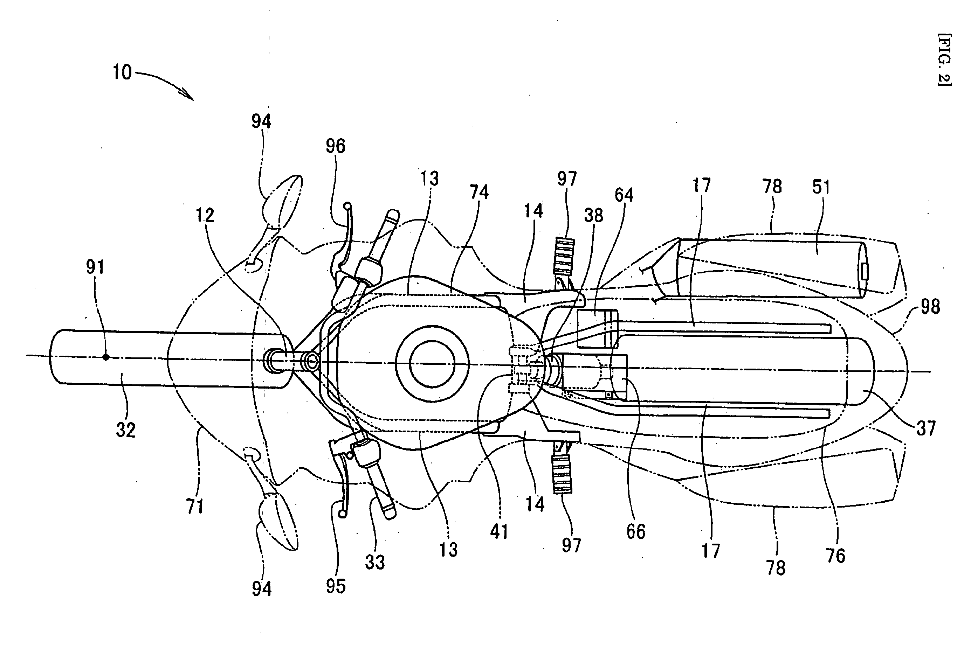

Fig. 2 is a plan view of the motorcycle (the first embodiment), showing that: the pivot plate 14 is attached to each of the rear ends of the left-right pair of main frames 13, 13; the cross pipe 41 is extended between the pivot plates 14, 14; one end of the rear cushion unit 38 is attached to the cross pipe 41; the rear cushion unit 38 is so disposed as to substantially coincide with a body center line 91 extending in the vehicle longitudinal direction, in a plan view; and the modulator 64 and the battery 66 are disposed laterally side-by-side, that is, along the vehicle width direction.
Here, reference numerals 94, 94 indicate back mirrors; 95, a rear-wheel brake lever; 96, a front-wheel brake lever; 97, 97, driver's steps; and 98, a rear body cover.

Fig. 3 is a main-part side view of the motorcycle (the first embodiment; the arrow (FRONT) in the drawings indicates the forward direction of the vehicle, and this applies in the followings), showing that the battery 66 is disposed substantially along the rear cushion unit 38 above the inclined rear cushion unit 38, and that the modulator 64 is disposed between a seat rail 17 and a sub-frame 18.

With regard to the rear cushion unit 38, since a lower end portion 38b swings up and down with an upper end portion 38a centered when the swing arm 36 swings up and down, the rear cushion unit 38 and a lower surface 66a of the battery 66 become parallel to each other when the rear cushion unit 38 swings to the uppermost point.

By disposing the battery 66 obliquely in this a way, it is made possible to form a space 101 above the rear of the battery 66, to utilize the space 101 for placing auxiliaries and the like, and to lower the seat 76 (see Fig. 1) to the space 101.

With regard to the modulator 64 described above, a supporting bracket 64A is attached, via rubber, to an upper bracket 17a attached to the seat rail 17 and to a lower bracket 18a attached to the sub-frame 18, and the modulator 64 is supported by the supporting bracket 64A.

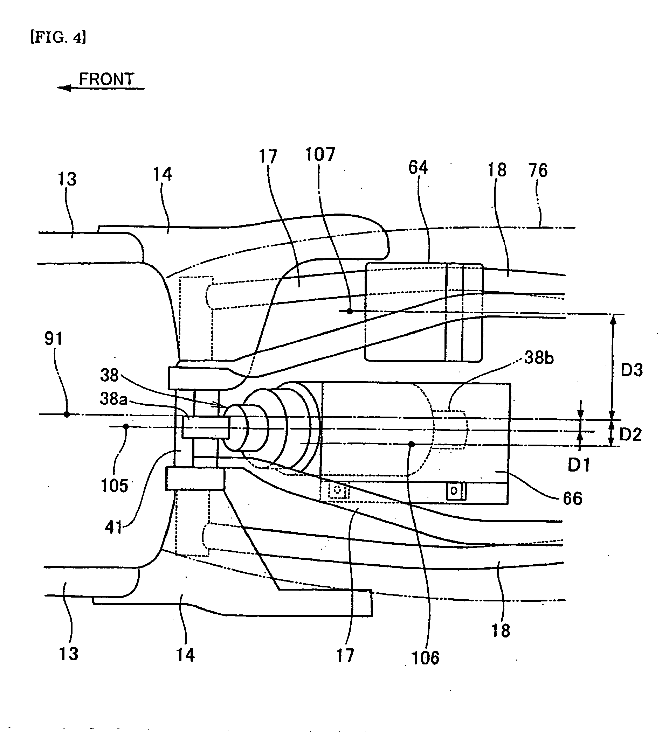

Fig. 4 is a main-part plan view of the motorcycle (the first embodiment), showing that a cushion center line 105, a battery center line 106 and a modulator center line 107 are positioned apart from the body center line 91 by distances D1, D2 and D3, respectively, the cushion center line 105 being a center line of the rear cushion unit 38 in the vehicle width direction, the battery center line 106 being a center line of the battery 66 in the vehicle width direction, and the modulator center line 107 being a center line of the modulator 64 in the vehicle width direction.

By disposing the rear cushion unit 38, battery 66 and the modulator 64 under the seat 76 in this way, it is made possible to achieve the concentration of the mass by virtue of the concentration of weighty objects at the center of the body. For example, when the motorcycle turns a corner or the like, the cornering having the center of weight centered, which center of weight is positioned at the center of the body, is easy. In other words, it is made possible to improve the cornering ability of the motorcycle.

In addition, by substantially equalizing the distance D1 from the body center line 91 to the cushion center line 105 and the distance D2 from the body center line 91 to the battery center line 106, it is made possible to dispose the battery 66 above the rear cushion unit 38 in such a manner that the battery 66 overlaps the rear cushion unit 38 in a plan view, so that the rear cushion unit 38 and the battery 66, which are weighty, are disposed near the body center line 91. Accordingly, it is possible to improve the right-and-left balance of weight of the body, and, even if other light objects are placed at positions apart from the body center line 91, it can be made easy to balance the right and left weight of the vehicle.

Moreover, a specific study shows that it is made possible to improve the right-and-left balance of weight by virtue of the rear cushion unit 38 and the battery 66, as well as the modulator 64 because the rear cushion unit 38 and the battery 66, which are weighty, are disposed in the left part of the body slightly apart from the body center line 91, and the modulator 64 lighter than the rear cushion unit 38 and the battery 66 is disposed in the right part of the body largely apart from the body center line 91.

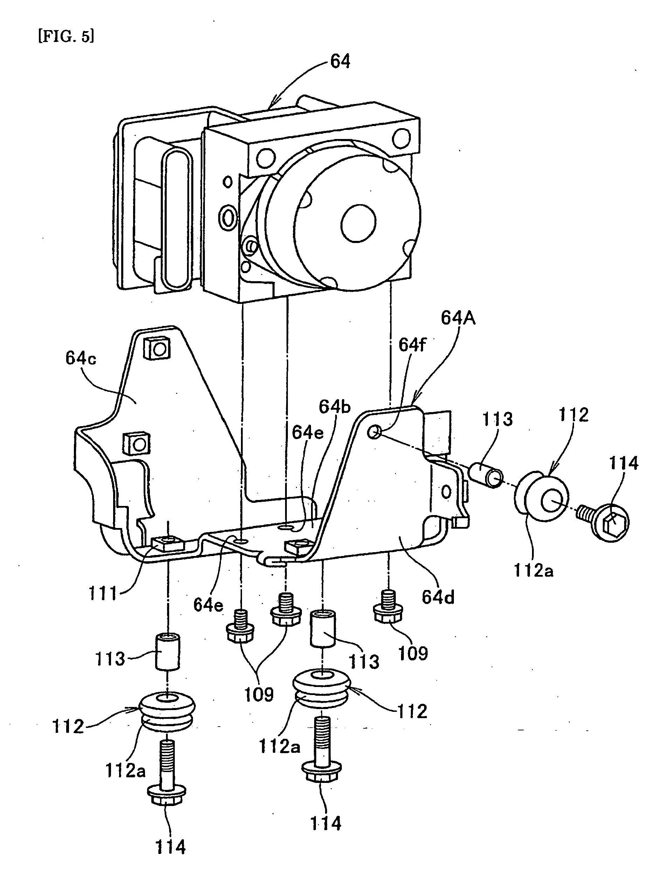

Fig. 5 is an exploded perspective view showing a support structure of the modulator (the first embodiment), showing a structure in which: the supporting bracket 64A is constituted of a bottom wall 64b, and side walls 64c and 64d; a plurality of bolt insertion holes 64e are made in the bottom wall 64b; the modulator 64 is attached to the supporting bracket 64A by inserting a bolt 109 into each of these bolt insertion holes 64e and screwing the bolt 109 into a female thread (not shown) provided in the bottom of the modulator 64; a plurality of nuts 111 are fixed on an upper surface of the bottom wall 64b; an annular groove 112a provided to each of rubber bushings 112, 112 is fitted to a hole made in the lower bracket 18a (see Fig. 3), and a collar 113 is inserted into each of the rubber bushings 112, 112; a bolt 114 is inserted into each of the collars 113; the supporting bracket 64A is rubber-mounted to the lower bracket 18a by screwing the bolt 114 into each of the nuts 111 described above; a nut (not shown) is fixed to the side wall 64d, and a bolt insertion hole 64f is made in the side wall 64d; an annular groove 112a provided to a rubber bushing 112 is fitted to a hole made in the upper bracket 17a (see Fig. 3), and a collar 113 is inserted into the rubber bushing 112; a bolt 114 is inserted into the collar 113; the supporting bracket 64A is rubber-mounted to the upper bracket 17a by inserting the bolt 114 into the bolt insertion hole 64f described above and screwing the bolt 114 into the nut (not shown).

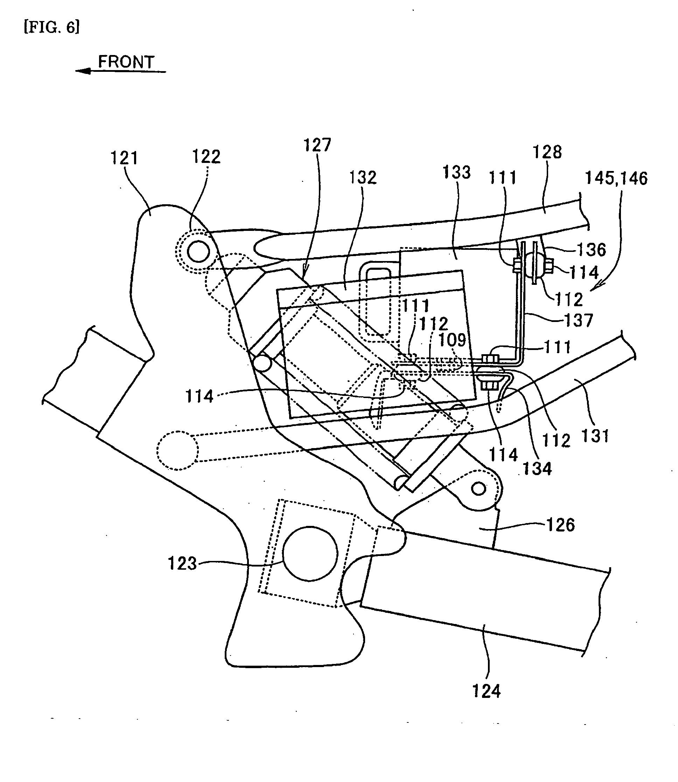

Fig. 6 is a main-part side view of a motorcycle adopting an arrangement structure of an ABS unit (a second embodiment) according to the present invention. The same constituent as that in the above first embodiment is designated by the same reference numeral, and the specific description thereof will be omitted.
Fig. 6 shows that: a cross pipe 122 is extended between upper portions of left and right pivot plates 121, 121 (only the reference numeral 121 on the viewer's side is shown); a swing arm 124 is attached to lower portions of the pivot plates 121, 121 via a swing shaft 123; a rear cushion unit 127 is attached to a bracket 126 provided at an upper portion of the swing arm 124 and to the cross pipe 122, extended therebetween; a left-right pair of seat rails 128, 128 (only the reference numeral 128 on the viewer's side is shown) are extended rearward from upper portions of the pivot plates 121, 121; a left-right pair of sub-frames 131, 131 (only the reference numeral 131 on the viewer's side is shown) are extended rearward under the seat rails 128, 128 from the pivot plates 121, 121, and the tips of sub-frames 131, 131 are joined to rear ends of the seat rails 128, 128; and a battery 132 and a modulator 133 are disposed between the seat rails 128, 128 and the sub-frames 131, 131.

The battery 132 is mounted by means of a battery fastener and a battery support (not shown) attached to a sub-frame 131. The modulator 133 has a support 137 rubber-mounted to a lower bracket 134, which is attached to the sub-frame 131, and to an upper bracket 136, which is attached to the seat rail 128, by means of a plurality of rubber bushings 112.

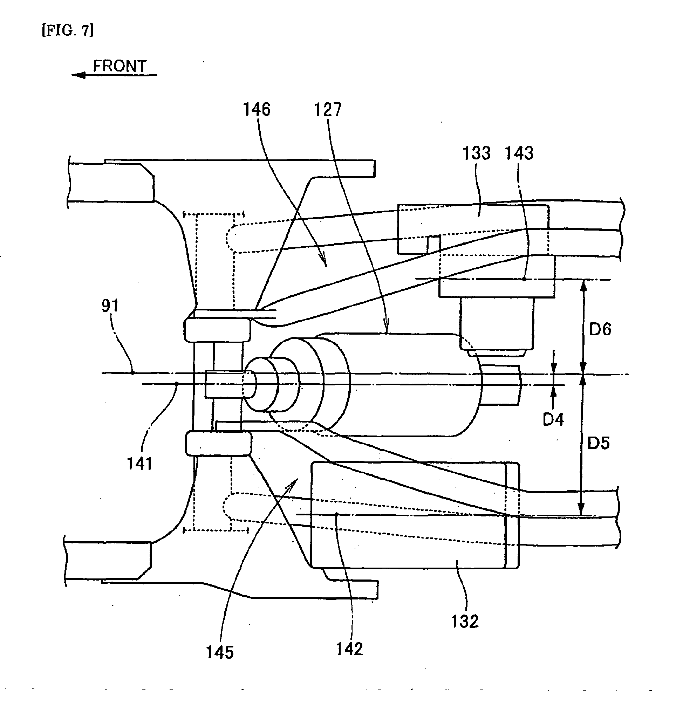

Fig. 7 is a main-part plan view of the motorcycle (the second embodiment) according to the present invention, showing that a cushion center line 141, a battery center line 142 and a modulator center line 143 are positioned apart from the body center line 91 by distances D4, D5 and D6, respectively, the cushion center line 141 being a center line of the rear cushion unit 127 in the vehicle width direction, the battery center line 142 being a center line of the battery 132 in the vehicle width direction, and the modulator center line 143 being a center line of the modulator 133 in the vehicle width direction.

By disposing the battery 132 and the modulator 133 laterally dispersedly with respect to the rear cushion unit 127 in this way, it is made possible to improve the right-and-left balance of weight of the motorcycle.

In addition, with regard to Figs. 6 and 7, by disposing the battery 132 and the modulator 133 in spaces 145 and 146 between each seat rail 128 and the corresponding sub-frame 131, respectively, it is possible to utilize these spaces 145 and 146 effectively.

As is described above with reference to Fig. 4, firstly, the motorcycle 10 (see Fig. 1) equipped with the ABS 60 (see Fig. 1), the modulator 64 as the ABS unit including a motor, a pump, hydraulic pipes, and solenoid valves for constituting the ABS 60 is disposed laterally side by side with the battery 66, under the seat 76.

Since the modulator 64 and the battery 66 are disposed under the seat 76, it is made possible to achieve the concentration of the mass at the center of the body because the modulator 64 and the battery 66, which are weighty, are concentrated at the center of the body. Therefore, it is possible to improve the right-and-left balance of weight of the motorcycle 10. Accordingly, it is made possible to improve the driving performance, such as the cornering ability, of the motorcycle 10.

Secondly, the modulator 64 and the battery 66 are disposed near the rear cushion unit 38 effecting a buffer action on the rear wheel 37 (see Fig. 2) side; and the battery 66 is so disposed as to overlap the body center line 91 substantially in a plan view, the body center line 91 extending in the vehicle longitudinal direction, in the above configuration as shown in Fig. 4

Since the modulator 64 and the battery 66 are disposed near the rear cushion unit 38, the mass can be further concentrated at the center of the body by virtue of the modulator 64, the battery 66 and the rear cushion unit 38, and the weighty battery 66 substantially overlaps the body center line 91. Accordingly, it can be made easy to balance the right and left weight of the motorcycle 10, and the design freedom of the motorcycle 10 is increased.

Thirdly, the present invention is characterized in that, the modulator 133 as the ABS unit and the battery 132 are disposed laterally dispersedly with the rear cushion unit 127 at least partly interposed therebetween, in the above configuration as shown in Fig. 7.

Since the battery 132 and the modulator 133 are dispersed to the left and the right of the rear cushion unit 127, the right-and-left balance of weight of the motorcycle 10 (see Fig. 1) is good, and it is possible to improve the driving performance of the motorcycle 10.

Fourthly, the battery 66 is disposed obliquely in the vehicle longitudinal direction substantially along the rear cushion unit 38 above the oblique rear cushion unit 38, in the above configuration as shown in Fig. 3.

Since the battery 66 is obliquely disposed substantially along the rear cushion unit 38 above the rear cushion unit 38, it is possible to utilize the space 100 above the rear cushion unit 38 effectively. Accordingly, it is possible to secure the space 101 for placing auxiliaries and the like other than the battery 66, and to lower the seat height by disposing the seat 76 in the space 101.

[Description of Reference Numerals] 10 ... motorcycle, 37 ... rear wheel, 38, 127 ... rear cushion unit, 60 ... ABS, 64, 133 ... ABS unit (modulator), 66, 132 ... battery, 76 ... seat, 91 ... body center line

## Claims

1. A motorcycle (10) comprising an arrangement structure of an ABS unit (133),
wherein the ABS unit (133) includes a motor, a pump, hydraulic pipes and solenoid valves for constituting the ABS (60) and is disposed laterally side by side with a battery (132) under the seat (76),
**characterized in that**
the ABS unit (133) and the battery (132) are disposed laterally dispersedly with a rear cushion unit (127) at least partly interposed therebetween.

## Patentansprüche

1. Motorisiertes Zweirad (10), das eine Anordnungs-Konstruktion einer ABS-Einheit (133) aufweist,
wobei die ABS-Einheit (133) einen Motor, eine Pumpe, Hydraulikleitungen und Magnetventile zur Bildung des ABS (60) aufweist, und wobei die ABS-Einheit (133) seitlich Seite an Seite mit einer Batterie (132) unter dem Sitz (76) angeordnet ist,
**dadurch gekennzeichnet, dass**
die ABS-Einheit (133) und die Batterie (132) seitlich verteilt angeordnet sind, mit einer wenigstens teilweise dazwischen angeordneten hinteren Dämpfungs-Einheit (127).

## Revendications

1. Motocycle (10) comprenant une structure d'agencement d'une unité ABS (133),
dans laquelle l'unité ABS (133) comprend un moteur, une pompe, des tuyaux hydrauliques et des soupapes électromagnétiques pour constituer l'ABS (60) et est disposée latéralement côte à côte avec une batterie (132) sous le siège (76),
**caractérisée en ce que** l'unité ABS (133) et la batterie (132) sont disposées latéralement de manière répartie avec une unité d'amortisseur arrière (127) au moins partiellement intercalée entre elles.
